# EUROPÄISCHE PATENTSCHRIFT

(11) **EP 0 646 652 B1**
(45) Veröffentlichungstag und Bekanntmachung des Hinweises auf die Patenterteilung: **17.12.1997**
(21) Anmeldenummer: 94250228.7
(22) Anmeldetag: 16.09.1994
(51) Int. Cl.: C21C 5/52, F27B 3/18, F27D 3/00

(54) **Stahlwerkseinrichtung mit geschlossenem kippbarem Lichtbogenofen**
Steel plant containing a closed tiltable arc furnace
Aciérie contenant un four à arc fermé et basculable

(30) Priorität: 23.09.1993 DE 4332913
(43) Veröffentlichungstag der Anmeldung: 05.04.1995
(73) Patentinhaber: MANNESMANN Aktiengesellschaft, 40213 Düsseldorf (DE)
(72) Erfinder: Meierling, Peter, D-40489 Düsseldorf (DE); Schaller, Hans-Ludwig, D-47443 Moers (DE)
(74) Vertreter: Meissner, Peter E., Dipl.-Ing.

(56) Entgegenhaltungen:
- EP-A- 0 385 434
- WO-A-93/13228
- DE-A- 1 758 842
- DE-C- 562 741
- FR-A- 1 598 035

## Beschreibung

Die Erfindung betrifft eine Stahlwerkseinrichtung mit geschlossenem kippbarem Lichtbogenofen zum Einschmelzen von Schrott, bestehend aus einem mit Feuerfestmaterial ausgekleideten Gefäßunterteil und einem an eine Absaugeinrichtung angeschlossenen Gefäßoberteil, der durch eine Ofendecke abgeschlossen ist und der eine verschließbare Beschickungsvorrichtung aufweist, durch die in einer Stahlwerkshalle mittels einer Transporteinrichtung herbeigeschaffter Möller beschickbar ist, sowie einer an einer Tragvorrichtung befestigten in das Gefäßoberteil hineinragenden Elektrode.

Aus der europäischen Patentanmeldung EP-A-0 235 434 ist ein Einschmelzaggregat bestehend aus einem Elektro-Lichtbogen mit aufgesetztem Vorwärmschacht bekannt. Der Vorwärmschacht ist seitlich im Deckel des Elektro-Lichtbogenofens angeordnet. Zwischen dem Vorwärmschacht und dem Deckel befindet sich ein ringförmiges Bauteil, welches eine verbesserte Verteilung und Beschickung des Chagiergutes in den Ofen ermöglicht. Um das Austreten von Ofengasen beim Ankippen des Ofens zu bremsen, wird der sich bildende Spalt zwischen Vorwärmschacht und Ofengefäß mittels einer Kettenschürze abgedeckt.

Aus DE OS 28 51 734 ist ein geschlossener elektrischer Schmelzofen mit einer Vorrichtung zum satzweisen Beschicken bekannt, mit einer Dichtungsvorrichtung, die im wesentlichen aus einem hohlzylinderartigen Rotationskörper besteht. Dieser Rotationskörper ist bis auf einen Auslaß geschlossen, so daß keine Möglichkeit besteht, Ofenabgase durch den im Rotationskörper befindlichen Möller strömen zu lassen. Aus der Schrift DE PS 56 27 41 ist eine Vorrichtung zum Vorwärmen von Beschickungsgut für elektrische Schmelzöfen bekannt, bei der auf dem Deckel eines Elektroofens Behälter angeordnet sind, die Abstreichvorrichtungen besitzen, die den Möller in den Ofen gelangen lassen.

Dieser kippbare Ofen weist einen Deckel auf, an dem die mit Hand oder mit einem Förderband füllbaren Behälter befestigt sind. Dieser bekannte Ofen ist nur für Feinstschrott, insbesondere für Stahlspäne und ähnliche Abfälle geeignet, nicht aber für den Einsatz und das Vorwärmen von üblicherweise in der Hüttenindustrie verarbeiteten Grobschrott.

Aus DE PS 35 40 734 ist ein Induktionsumschmelzofen bekannt, bei dem im Ofendeckel angeordnete Beschickungsschächte integriert sind, an die gleichzeitig eine Rauchgasabsaugung angeschlossen ist. Diese Beschickungsschächte weisen Zinken auf, die im geschlossenen Zustand ineinandergreifen und als Bremsvorrichtung für abfallende Kathodenbleche dienen. Diese gattungsfremden Beschickungsschächte für Kathoden mit ihrem Aufgabetisch und der Beschickungsklappe bieten keinerlei Hinweise für Vorratsbehälter von Elektrolichtbogenöfen zum Einschmelzen von Schrott, bei dem der Möller vorgeheizt wird.

Die Erfindung hat sich das Ziel gesetzt, eine Stahlwerkseinrichtung zu schaffen, bei der ein kippbarer Lichtbogenofen emissionsfrei ohne Betriebsunterbrechung mit unmittelbar am Ofen durch dessen fühlbare Wärme vorgewärmtem Schrott chargiert werden kann.

Die Erfindung erreicht dieses Ziel durch die kennzeichnenden Merkmale des Anspruchs 1.

Erfindungsgemäß werden Vorratsbehälter vorgeschlagen, die zu beiden Seiten der Elektrodentragvorrichtung angeordnet an der Hallenbühne befestigt sind. Unabhängig von dem Ofengefäß werden die hohen Gewichte, insbesondere der mit Schrott gefüllten Behälter unmittelbar von der Bühne aufgenommen. Die Vorratsbehälter besitzen einen gasdurchlässigen während des Chargierens entfernbaren Boden, der das Durchströmen der heißen Rauchgase durch den in die Behälter einfüllbaren Schrott zuläßt. Am Kopfende der Behälter ist die Rauchgasabsaugung vorgesehen, so daß ein vollständiges und ungehindertes Durchströmen der Gase durch die Schrottsäule erfolgt.

Zwischen den Vorratsbehältern und der Ofendecke oder der mit Vorratsbehältern versehenen Ofendecke und dem Obergefäß des kippbaren Lichtbogenofens oder auch zwischen Gefäßoberteil und Gefäßunterteil ist ein ring förmiger Bauteil als Kompensationselement vorgesehen. Dieses Kompensationselement erlaubt ein ungehindertes Vorwärts- bzw. Rückwärtskippen des Lichtbogenofens, auf jeden Fall des mit Schmelze gefüllten Gefäßunterteils. Darüber hinaus ist es in der Lage, in einem modernen Stahlwerksbetrieb mit kippbaren, einen exzentrischen Bodenabstich aufweisenden Lichtbogenofen zu betreiben, ohne daß Emissionen auftreten.

Die Kompensationsarbeit kann vermindert werden durch ein Mitschwenken der Vorratsbehälter während des Kippens oder auch durch eine gezielte Kippbewegung des Lichtbogenofens, die nicht durch Abwälzen auf einer Abwälzbahn hervorgerufen werden. Der Kompensator kann dabei ein einfaches Tuch sein, das ggfs. im Ofeninnenraum durch Schutzelemente, z. B. durch Ketten gegen Spritzer geschützt werden kann.

Die Kompensatoreinrichtung erlaubt es, das Untergefäß gegenüber dem feststehenden Oberteil bzw. den Vorratsbehälter zu kippen, ohne daß den geschlossenen Ofen Rauchgase außerhalb der Rauchgasleitung verlassen. Weiterhin wird vorgeschlagen, metallische Kompensatoren einzusetzen. Darüber hinaus kommen möglicherweise Elemente zum Einsatz, die eine Lateralbewegung des Kompensators minimieren.

In einer weiteren vorteilhaften Ausgestaltung wird eine Sand- oder Flüssigkeitstasse vorgeschlagen, ein an anderer Stelle in hüttenmännischen Betrieben erfolgreich eingesetztes Dichtelement, welches Relativbewegungen zwischen den miteinander verbundenen Bauteilen zuläßt und gleichzeitig bei den hier vorhandenen Druckunterschieden innerhalb des Ofens und Hallenatmosphäre ein Austreten von Gasen und Stäuben nicht zuläßt.

In einer Ausgestaltungsform ist die Ofendecke in Richtung des Elektrodentragarms geteilt und in unabhängigen Flügeln vom Oberofengefäß wegschwenkbar. Hierdurch besteht die Möglichkeit, für besondere Ereignisse oder auch zur Inspektion des Ofens das Oberofengefäß zu öffnen.

Die auf der Ofendecke angeordneten Vorratsbehälter erlauben ein umweltfreundliches Chargieren des Schrottes, und gleichzeitig ein maximales Ausnutzen der Wärmeenergie der Rauchgase. Die Vorratsbehälter sind dabei in der überwiegenden Zeit ihres Betriebes an ihrem Kopfende durch Absperrelemente geschlossen. Der mit Schrott gefüllte Schrottkorb wird oberhalb des Schiebers auf den Vorratsbehälter aufgesetzt, anschließend wird das Absperrelement geöffnet und der Schrott fällt in den Vorratsbehälter bis auf den gasdurchlässigen Boden. Während des Schrottfüllvorganges sitzt der Schrottbehälter dichtend auf der Mündung des Vorratsbehälters auf, so daß Emissionen von Staub nicht auftreten. Das am Kopf des Vorratsbehälters vorgesehene Absperrelement wird wieder geschlossen und der Schrottbehälter kann entfernt werden. Der im Vorratsbehälter befindliche Schrott wird aufgewärmt und kann zur beliebigen Zeit durch Öffnen des gasdurchlässigen Bodens chargiert werden. Das Chargieren erfolgt ohne Behinderung, wobei der emissionsdicht geschlossene Ofen an keiner Stelle geöffnet werden muß.

Ein Beispiel der Erfindung ist in der beigefügten Zeichnung dargelegt. Dabei zeigen die
Figur 1 eine Ofenübersicht
Figur 2 Ausgestaltung des Bodens eines Vorratsbehälters.
Figur 3 eine Ausgestaltung der Ofendecke

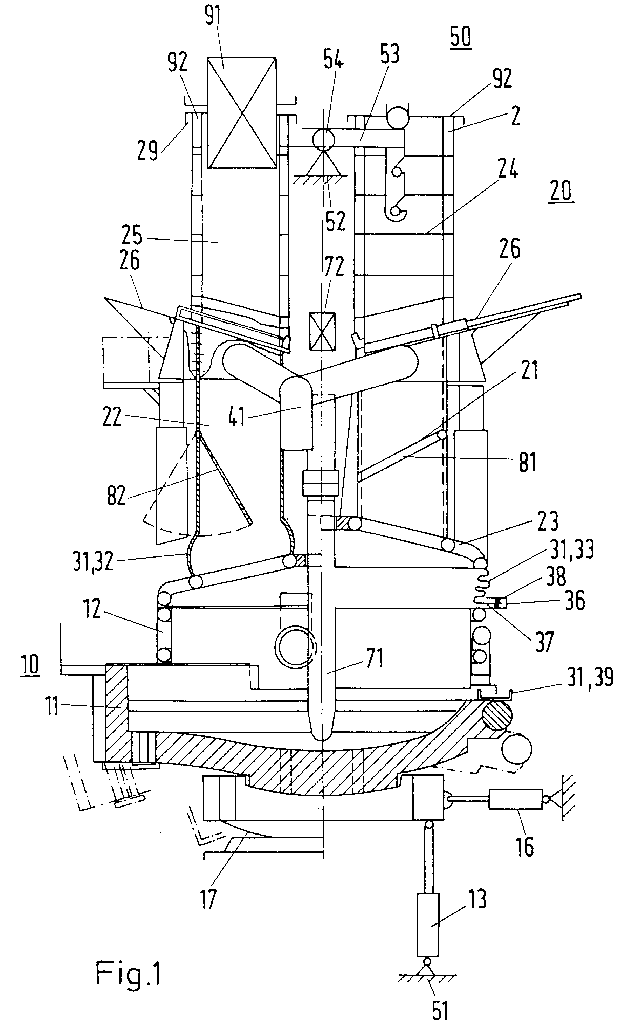

Die Figur 1 zeigt schematisch einen kippbaren Lichtbogenofen 10 mit einem Gefäßunterteil 11 und einem Gefäßoberteil 12. Das Gefäßunterteil ruht im linken Teil der Figur auf einer Wippe 17 und im rechten Teil wird das Halten und die Kippbewegung durch Kolbenzylinder durchgeführt, und zwar zum einen durch mindestens drei vertikale Kolbenzylinder 13 und einen horizontalen Kolbenzylinder 16.

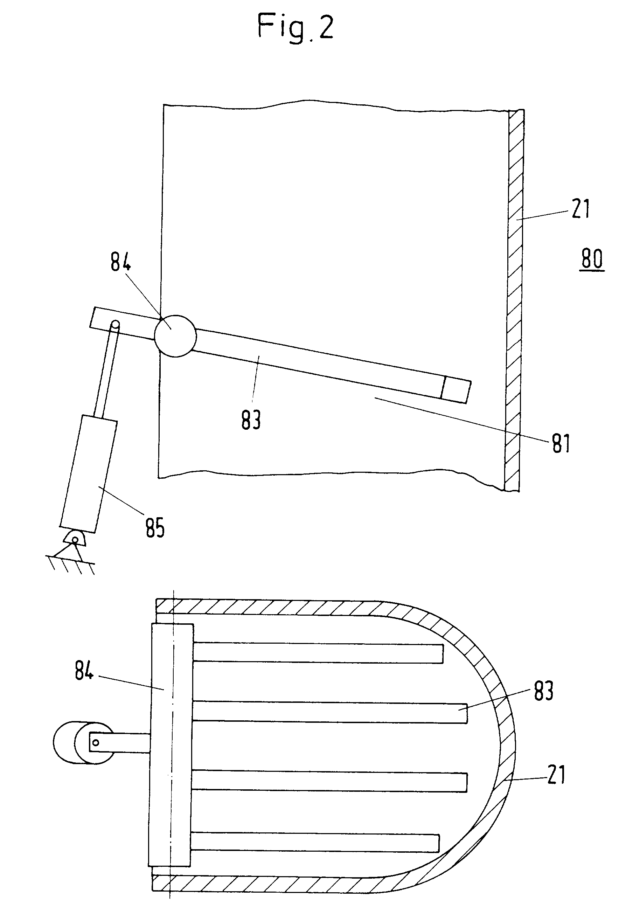

Das die Beschickungszufuhr umfassende Bauteil ist mit 20 bezeichnet, das die Vorratsbehälter 21, 22 aufweist, die oberhalb von Öffnungen in der Ofendecke 23 angeordnet sind.
Die Vorratsbehälter sind an eine Rauchgasleitung 41 angeschlossen. Auf der vom Ofen wegweisenden Seite der Rauchgasleitungen sind die Vorratsbehälter 21, 22 durch eine Absperreinheit 26 verschließbar. Die auf der vom Ofen 10 abgewandeten Seite der Absperreinheit 26 vorgesehehen Mündungen 24, 25 besitzen Dichtlippen 29. Diese Dichtlippen 29 korrespondieren mit einem Schrottkorb 91 vorgesehenen Dichtlippen 92.
Die nicht weiter dargestellte Stahlwerkshalle 50 weist ein Fundament 51 auf, an dem sich die vertikalen Kolbenzylinder 13 abstützen und eine Bühne 52, an der eine Haltevorrichtung 53 angeordnet ist, die mit den Vorratsbehältern 21, 22 bzw., wie in der Figur dargestellt, mit den Mündungen 24, 25 in Verbindung stehen. An der Haltevorrichtung 53 ist eine Lagerung 54 vorgesehen, die Kippbewegungen oder auch eine seitliche Verschiebebewegung der Vorratsbehälter zuläßt.
Zwischen den an der Bühne 52 der Stahlwerkshalle 50 aufgehängten Vorratsbehältern 21, 22 und dem sich am Fundament 51 abstützenden Gefäßunterteil 11 ist ein ringförmiges Bauteil 30 vorgesehen, das die durch die Kippbewegung zumindest des Gefäßunterteils 11 hervorgerufene Lageänderung zu den Vorratsbehältern 21, 22 gasdicht kompensiert. In der Figur 1 sind diese ringförmigen Bauteile 30 als Kompensationselemente 31 dargestellt, und zwar als Beispiel zwischen dem Vorratsbehälter 22 und der Ofendecke 23 ein Tuch 32, zwischen der Ofendecke 23 und dem Gefäßoberteil 12 ein metallischer Kompensator 33 und zwischen dem Gefäßoberteil 12 und dem Gefäßunterteil 11 eine Tasse 39.
Bei dem Beispiel des metallischen Kompensators 33 ist zum horizontalen Ausgleich noch eine Ringscheibe 37 vorgesehen, die in eine Ringhülse 36 hineinragt und darüber hinaus durch Dichtringe 38 abgedichtet ist.
Zur Vervollständigung des Lichtbogenofens 10 ist eine Elektrodentrageinrichtung 70 dargestellt mit der Elektrode 71, die an einem Tragarm 72 befestigt ist. Der ebenfalls dargestellte Boden 80 der Vorratsbehälter 21, 22 weist Klappen 81, 82 auf, die in der Figur 2 näher beschrieben werden.
Dabei zeigt die Figur 2 Draufsicht und Seitenansicht des Vorratsbehälters 21 mit dem als Klappe ausgebildeten öffenbaren Boden 81. Der öffenbare Boden 81 weist dabei ein Drehgelenk 84 auf, über das aufeinander beabstandete Kniehebel 83 durch einen Antrieb 85 schwenkbar sind. Die einzelnen Kniehebel 83 weisen dabei einen Abstand auf, der den Möller zurückhält, aber das Gas durchströmen läßt.

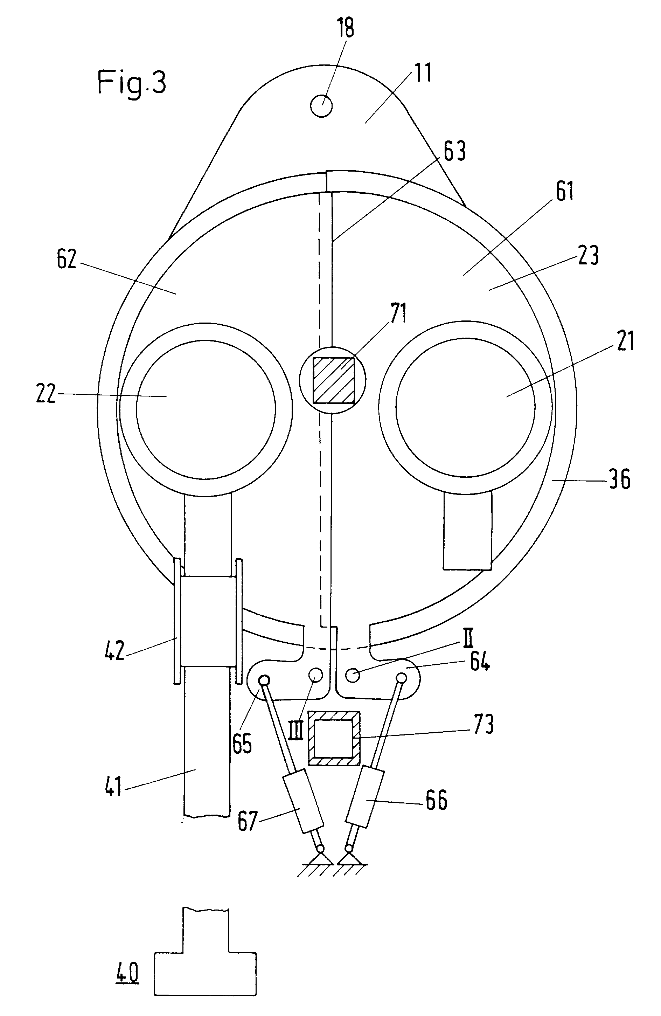

In der Figur 3 ist eine Draufsicht der Decke 23 dargestellt, die Deckenteile 61 und 62 aufweist, welche Öffnungen für die Vorratsbehälter 21 und 22 besitzen. Die Deckenteile 61 und 62 besitzen halbkreisförmige Flächen und überlappen sich in der Ofenlängsachse an einer Trennlinie 63. Die Deckenteile 61, 62 sind Teil einer Schwenkeinrichtung 60 und hierbei mit Knebel 64 und 65 verbunden, die über Antriebe 66 und 67 um Drehachsen II und III drehbar sind. Der äußere Rand der Deckelteile 61, 62 wird durch eine Ringhülse 36 gebildet.
In der Draufsicht ist noch im Schnitt die Elektrode 71 und die dazugehörige Tragsäule 73 dargestellt.
Weiterhin ist die Absaugleitung 41 aufgezeigt, die eine Schiebehülse 42 aufweist. Die Absaugleitung 41 ist mit einer nicht weiter dargestellten Absaugeinrichtung 40 verbunden.
Zur Vervollständigung ist die Draufsicht auf das Ofengefäß 11 angedeutet, und zwar der exzentrische Teil mit der Abstichöffnung 18.

### Positionsliste

- 10: Lichtbogenofen
- 11: Gefäßunterteil
- 12: Gefäßoberteil
- 13: vertikaler Kolbenzylinder
- 16: horizontaler Kolbenzylinder
- 17: Wippe
- 18: Abstichöffnung
- 20: Möllerzufuhr
- 21,22: Vorratsbehälter
- 23: Ofendecke
- 24: Mündung 21
- 25: Mündung 22
- 26: Absperreinheit
- 29: Dichtlippe
- 30: ringförmiges Bauteil
- 31: kompensierendes Element
- 32: Tuch
- 33: metallischer Kompensatior
- 36: Ringhülse
- 37: Ringscheibe
- 38: Dichtringe
- 39: Tasse
- 40: Absaugungeinrichtung
- 41: Absaugungsleitung
- 42: Schiebehülse
- 50: Stahlwerkshalle
- 51: Fundament
- 52: Bühne
- 53: Haltevorrichtung
- 54: Lagerung
- 60: Schwenkeinrichtung
- 61,62: Deckenteil
- 63: Trennlinie
- 64: Knebel 61
- 65: Knebel 62
- 66: Antrieb 64
- 67: Antrieb 65
- 70: Elektrodentrageinrichtung
- 71: Elektrode
- 72: Tragarm
- 73: Tragsäule
- 80: Boden
- 81: öffenbarer Boden 21
- 82: öffenbarer Boden 22
- 83: Kniehebel
- 84: Drehgelenk
- 85: Antrieb 83
- 90: Schrottzufuhr
- 91: Schrottkorb
- 92: Dichtlippe
- I: Offenmittenachse
- II: Drehachsen
- III: Drehachsen

## Patentansprüche

1. Stahlwerkseinrichtung mit geschlossenem kippbaren Lichtbogenofen zum Einschmelzen von Schrott, bestehend aus einem mit Feuerfestmaterial ausgekleideten Gefäßunterteil und einem an eine Absaugeinrichtung angeschlossenen Gefäßoberteil, der durch eine Ofendecke abgeschlossen ist und der eine verschließbare Beschickungsvorrichtung aufweist, durch die in einer Stahlwerkshalle mittels einer Transporteinrichtung herbeigeschafften Beschickung beschickbar ist, sowie einer an einer Tragvorrichtung befestigten, in das Gefäßoberteil hineinragenden Elektrode, wobei zwischen Vorratsbehältern (21, 22) und dem Gefäßunterteil (11) ein im wesentlichen senkrecht zur Ofenmittenachse (I) verlaufendes ringförmiges Bauteil (30) vorgesehen ist das ringförmige Bauteil (30) als Kompensationselement (31) ausgebildet ist, das die
dadurch gekennzeichnet,
daß die Beschickungsvorrichtung (20) mindestens zwei Vorratsbehälter (21, 22) aufweist, die kopfendig unterhalb einer Verschlußeinrichtung (26) an die Absaugeinrichtung (40) angeschlossen sind,
daß die Vorratsbehälter (21, 22) fußendig öffenbare, gasdurchlässige Böden (81, 82) besitzen,
daß eine an einer Lagerung (54) der Stahlwerkshalle (50) befestigte Haltevorrichtung (53) vorgesehen ist, an der die Vorratsbehälter (21, 22) befestigbar sind, und
daß durch die Kippbewegung zumindest des Gefäßunterteils (11) hervorgerufenen Lageänderungen zu den Vorratsbehältern (21, 22) gasdicht kompensiert.

2. Stahlwerkseinrichtung nach Anspruch 1,
dadurch gekennzeichnet,
daß das ringförmige Bauteil (30) ein zwischen der Ofendecke (23) und der Mündung des Gefäßoberteils (12) angeordnetes Kompensationselement (31) ist.

3. Stahlwerkseinrichtung nach Anspruch 2,
dadurch gekennzeichnet,
daß das Kompensationselement (31) ein hitzebeständiges, gasdichtes Tuch (32) ist.

4. Stahlwerkseinrichtung nach Anspruch 2,
dadurch gekennzeichnet,
daß das Kompensationselement (31) ein metallischer Kompensator (33) ist.

5. Stahlwerkseinrichtung nach Anspruch 4,
dadurch gekennzeichnet,
daß das Kompensationselement (31) ein an der Mündung des Gefäßoberteils (12) befestigte, ringförmige Scheibe oder Hülse aufweist, die in eine an der Ofendecke (23) angebrachten U-förmigen Ringhülse (36) oder Ringscheibe (37) führbar ist.

6. Stahlwerkseinrichtung nach Anspruch 5,
dadurch gekennzeichnet,
daß zwischen der Ringhülse (35) und der Scheibe bzw. der Ringscheibe (37) und der Hülse elastische Dichtringe (38) vorgesehen sind.

7. Stahlwerkseinrichtung nach Anspruch 5,
dadurch gekennzeichnet,
daß die Ofendecke (23) zweigeteilt ist und daß jeder Deckenteil (61, 62) an eine als Scharnier ausgebildeten Schwenkeinrichtung (60) befestigt ist, in der ein horizontales Wegschwenken der Deckenteile (61, 62) möglich ist.

8. Stahlwerkseinrichtung nach Anspruch 7,
dadurch gekennzeichnet,
daß die Trennlinie (63) beider Ofendeckenteile (61,62) im wesentlichen parallel zum Elektrodentragarm (72) verläuft und die Deckenteile (61, 62) an der Trennlinie (63) einander überlappend angeordnet sind.

9. Stahlwerkseinrichtung nach Anspruch 1,
dadurch gekennzeichnet,
daß das ringförmige Bauteil (30) eine zwischen dem Gefäßunterteil (11) und dem Gefäßoberteil (12) angeordnete Tasse (39) ist.

10. Stahlwerkseinrichtung nach Anspruch 1,
dadurch gekennzeichnet,
daß der öffenbare Boden (81, 82) aus zinkenförmigen Kniehebeln (83) besteht, deren einzelne Hebel über Antriebe (85), z. B. pneumatische Kolbenzylindereinheiten, schwenkbar sind.

11. Stahlwerkseinrichtung nach Anspruch 1,
dadurch gekennzeichnet,
daß die Haltevorrichtung (53) eine Lagerung (54) aufweist, die eine Kippbewegung der Vorratsbehälter (21, 22) und der Elektrodentragvorrichtung (70) korrespondierend zur Kippbewegung des Ofengefäßes (11, 12) zuläßt.

12. Stahlwerkseinrichtung nach Anspruch 1,
dadurch gekennzeichnet,
daß die kopfendigen Mündungen (24, 25) der Vorratsbehälter (21,22) Dichtlippen (29) aufweisen, auf denen ein Schrottkorb (91) mit einer korrespondierenden Gegenlippe (92) absetzbar ist.

13. Stahlwerkseinrichtung nach einem der oben genannten Ansprüche,
dadurch gekennzeichnet,
daß die Kippbewegung des Ofengefäßes (11, 12) durch mit dem Ofenuntergefäß (11) verbundene Kolbenzylinder-Einheiten (14-16) erzeugt wird, wobei mindestens eine (16) horizontal und drei Einheiten (14-15) davon vertikal angeordnet sind.

## Claims

1. A steel-making apparatus with a closed tiltable arc furnace for smelting scrap, consisting of a lower vessel part lined with refractory material and an upper vessel part connected to an extraction means, which furnace is closed off by a furnace roof and which has a closable charging device, through which in a steelworks hall charge brought in by means of a transport means can be charged, and also an electrode fastened to a supporting device and projecting into the upper part of the vessel, wherein between storage containers (21, 22) and the lower part of the vessel (11) there is provided an annular component (30) extending substantially at right-angles to the central furnace axis (I),
characterised in that
the charging device (20) has at least two storage containers (21, 22) which are connected at the top end beneath a closing means (26) to the extraction means (40),
that the storage vessels (21, 22) have at the bottom end openable, gas-permeable bottoms (81, 82),
that a holding device (53) fastened to a bearing (54) of the steelworks hall (50) is provided, to which the storage containers (21, 22) can be attached, and that the annular component (30) is designed as a compensation element (31), which compensates in gastight manner for the changes in position relative to the storage containers (21, 22) which are caused by the tilting movement at least of the lower vessel part (11).

2. A steel-making apparatus according to Claim 1, characterised in that the annular component (30) is a compensation element (31) arranged between the furnace roof (23) and the mouth of the upper furnace part (12).

3. A steel-making apparatus according to Claim 2, characterised in that the compensation element (31) is a heat-resistant, gastight cloth (32).

4. A steel-making apparatus according to Claim 2, characterised in that the compensation element (31) is a metallic compensator (33).

5. A steel-making apparatus according to Claim 4, characterised in that the compensation element (31) has an annular disc or sleeve fastened to the mouth of the upper vessel part (12), which disc or sleeve can be guided in a U-shaped annular sleeve (36) or annular disc (37) attached to the furnace roof (23).

6. A steel-making apparatus according to Claim 5, characterised in that elastic sealing rings (38) are provided between the annular sleeve (36) and the disc or the annular disc (37) and the sleeve.

7. A steel-making apparatus according to Claim 5, characterised in that the furnace roof (23) is divided into two and that each roof part (61, 62) is fastened to a pivoting means (60) designed as a hinge, in which it is possible to pivot the roof parts (61, 62) away horizontally.

8. A steel-making apparatus according to Claim 7, characterised in that the separating line (63) of the two furnace roof parts (61, 62) extends substantially parallel to the electrode supporting arm (72) and the roof parts (61, 62) are arranged at the separating line (63) to overlap one another.

9. A steel-making apparatus according to Claim 1, characterised in that the annular component (30) is a cup (39) arranged between the lower vessel part (11) and the upper vessel part (12).

10. A steel-making apparatus according to Claim 1, characterised in that the openable bottom (81, 82) consists of prong-shaped toggle levers (83), the individual levers of which can be pivoted by means of drives (85), e.g. pneumatic piston-cylinder units.

11. A steel-making apparatus according to Claim 1, characterised in that the holding device (53) has a bearing (54) which permits a tilting movement of the storage containers (21, 22) and the electrode supporting device (70) corresponding to the tilting movement of the furnace vessel (11, 12).

12. A steel-making apparatus according to Claim 1, characterised in that the mouths (24, 25) of the storage containers (21, 22) at the top end have sealing lips (29), on to which a scrap basket (91) with a corresponding counter-lip (92) can be lowered.

13. A steel-making apparatus according to one of the above claims, characterised in that the tilting movement of the furnace vessel (11, 12) is produced by piston-cylinder units (14-16) connected to the lower furnace vessel (11), with at least one unit (16) being arranged horizontally and three units (14-15) thereof being arranged vertically.

## Revendications

1. Aciérie, comportant un four à arc fermé et basculable, pour fondre des ferrailles, constitué d'une partie inférieure de récipient revêtue d'une matière réfractaire et d'une partie supérieure de récipient raccordée à un dispositif d'aspiration, qui est fermée par un couvercle de four et qui présente un dispositif de chargement pouvant être fermé, grâce auquel le chargement amené au moyen d'un dispositif de transport peut être effectué dans un hall de l'aciérie, ainsi qu'une électrode fixée à un dispositif de support et pénétrant dans la partie supérieure de récipient, une pièce annulaire (30) s'étendant sensiblement perpendiculairement à l'axe central du four (I) étant prévue entre des réservoirs de stockage (21,22) et la partie inférieure de récipient (11),
caractérisée en ce que le dispositif de chargement (20) présente au moins deux réservoirs de stockage (21,22), qui sont raccordés à l'extrémité de tête, au-dessous d'un dispositif de fermeture (26), au dispositif d'aspiration (40), en ce que les réservoirs de stockage (21,22) possèdent, à l'extrémité de pied, des fonds (81,82) perméables aux gaz pouvant être ouverts, en ce qu'un dispositif de maintien (53) fixé à un support (54) du hall d'aciérie (50) est prévu, sur lequel les réservoirs de stockage (21,22) peuvent être fixés, et en ce que la pièce annulaire (30) est réalisée comme élément de compensation (31) qui compense, de façon étanche aux gaz, par rapport aux réservoirs de stockage (21,22), des modifications de position provoquées par le mouvement de basculement d'au moins la partie inférieure de récipient (11).

2. Aciérie selon la revendication 1,
caractérisée en ce que la pièce annulaire (30) est un élément de compensation (31) agencé entre le couvercle de four (23) et l'embouchure de la partie supérieure de récipient (12).

3. Aciérie selon la revendication 2,
caractérisée en ce que l'élément de compensation (3i) est une étoffe (32) résistant à la chaleur et étanche aux gaz.

4. Aciérie selon la revendication 2,
caractérisée en ce que l'élément de compensation (31) est un compensateur métallique (33).

5. Aciérie selon la revendication 4,
caractérisée en ce que l'élément de compensation (31) présente un disque ou manchon annulaire, fixé à l'embouchure de la partie supérieure de récipient (12), qui peut être guidé dans un disque annulaire (37) ou manchon annulaire (36) en forme de U appliqué sur le couvercle de four (23).

6. Aciérie selon la revendication 5,
caractérisée en ce que des bagues d'étanchéité élastiques (38) sont prévues entre le manchon annulaire (36) et le disque ou le disque annulaire (37) et le manchon.

7. Aciérie selon la revendication 5,
caractérisée en ce que le couvercle de four (23) est divisé en deux, et en ce que chaque partie de couvercle (61,62) est fixée à un dispositif pivotant (60) réalisé comme charnière, dans lequel un pivotement horizontal des parties de couvercle (61,62) les éloignant est possible.

8. Aciérie selon la revendication 7,
caractérisée en ce que la ligne de séparation (63) des deux parties de couvercle de four (61,62) s'étend sensiblement parallèlement au bras de support d'électrode (72), et les parties de couvercle (61,62) sont agencées sur la ligne de séparation (63) en se chevauchant l'une l'autre.

9. Aciérie selon la revendication 1,
caractérisée en ce que la partie annulaire (30) est une rigole (39) agencée entre la partie inférieure de récipient (11) et la partie supérieure de récipient (12).

10. Aciérie selon la revendication 1,
caractérisée en ce que le fond (81,82), qui peut être ouvert est constitué de leviers coudés (83) en forme de dents de peigne dont les leviers individuels peuvent être pivotés par des entraînements (85), par exemple des vérins pneumatiques.

11. Aciérie selon la revendication 1,
caractérisée en ce que le dispositif de maintien (53) présente un support (54) qui autorise un mouvement de basculement des réservoirs de stockage (21,22) et du dispositif de support d'électrode (70) de façon correspondant au mouvement de basculement du récipient de four (11,12).

12. Aciérie selon la revendication 1,
caractérisée en ce que les embouchures (24,25), à l'extrémité de tête, des réservoirs de stockage (21,22) présentent des lèvres d'étanchéité (29) sur lesquelles un panier de ferrailles (91) ayant une contre-lèvre correspondante (92) peut être déposé.

13. Aciérie selon une des revendications précitées,
caractérisée en ce que le mouvement de basculement du récipient de four (11,12) est engendré par des vérins (14-16) reliés à la partie inférieure de récipient (11), au moins un vérin (16) étant agencé horizontalement et trois vérins (14-15) étant agencés verticalement à celui-ci.
